# EUROPÄISCHE PATENTSCHRIFT

(11) **EP 0 797 087 B1**
(45) Veröffentlichungstag und Bekanntmachung des Hinweises auf die Patenterteilung: **10.05.2000**
(21) Anmeldenummer: 97104763.4
(22) Anmeldetag: 20.03.1997
(51) Int. Cl.: G01M 10/00

(54) **Einrichtung zum Ausscheiden von Luftblasen in Wasserumlaufkanälen**
Device for discharging air bubbles in water circulating channels
Dispositif de décharge de bulles d'air dans des canaux à circulation d'eau

(30) Priorität: 22.03.1996 DE 19611278
(43) Veröffentlichungstag der Anmeldung: 24.09.1997
(73) Patentinhaber: Technisches Zentrum Entwicklungs & Handelsgesellschaft mbH, 04229 Leipzig (DE)
(72) Erfinder: Döge, Klaus, Dr.-Ing.habil., 01279 Dresden (DE); Fitzner, Wigand, Dipl.-Ing., 04207 Leipzig (DE); Jahn, Klaus, Dr.-Ing., verstorben (DE)
(74) Vertreter: Heyner, Klaus, Dr.-Ing.

(56) Entgegenhaltungen:
- DD-A- 301 361
- DE-A- 2 105 551

## Beschreibung

Die Erfindung betrifft eine Einrichtung zum Ausscheiden von Luftblasen in Wasserumlaufkanälen bzw. Strömungskanälen mit freier Wasseroberfläche an der Meßstrecke oder im Aufenthaltsbereich, bei der die oberste Wasserschicht durch eine Scheide vom Hauptstrom abgetrennt und einer Beruhigungszone zugeführt wird, während der mit einem Fangsieb versehene Hauptstrom durch einen Krümmer nach unten abgelenkt wird.

Bei Wasserumlaufkanälen wird in der Meßstrecke oder im Aufenthaltsbereich durch das Eintauchen der zu messenden Objekte, der Meßeinrichtungen bzw. durch die sich hier aufhaltenden Personen dem Wasser Luft beigemischt, die vor dem erneuten Einpumpen in die Meßstrecke oder dem für Rehabilitationszwecke genutzten Abschnitt ausgeschieden werden soll. Hierzu ist es bekannt, an die Meßstrecke oder den Aufenthaltsbereich eine Beruhigungsstrecke anzuschliessen, in der die Luftblasen aus dem Wasser ausgeschieden werden.

So ist ein Umlaufkanal bekannt (Hansa-Schiffahrt-Schiffbau-Hafen - 105. Jg.,1968, Sondernummer SG, Nov., S. 2006-2010), bei dem der gesamte Wasserstrom nach dem Durchfließen der Meßstrecke durch eine Beruhigungsstrecke von 25 m Länge zum Ausscheiden der mitgerissenen Luftblasen geleitet wird. Neben dem Nachteil der großen Baulänge kommt ein hoher Energieaufwand zum erneuten Umpumpen der Wassermenge hinzu.

Es ist auch ein Umlaufkanal bekannt (Schiffstechnik Bd. 6, 1959, H. 33, S. 139-144), bei dem am Ende der Meßstrecke eine verstellbare Schneide die oberste, mit Luftblasen durchsetzte Wasserschicht abschneidet und über einen Siebkasten als Beruhigungsstrecke leitet. Die aufsteigende Luft wird über die Wasseroberfläche durch die Pumpe abgesaugt, damit das Wasser die Zulaufstrecke ohne freie Oberfläche füllt. Auch diese Lösung erfordert durch das Anbringen der zusätzlichen Pumpe einen größeren Bau- und Energieaufwand.

Aus DE-OS 21 05 551 ist ein Wasserumlaufkanal bekannt, bei dem die oberste Wasserschicht vom Hauptstrom abgetrennt und durch eine relativ lange Beruhigungsstrecke geleitet wird. Der Hauptstrom fließt hinter der Meßstrecke durch einen Diffusor, wodurch sich der Druck erhöht. Um die abgeschnittene kleine Wassermenge wieder in den Hauptstrom zurückzuführen, muß in den Nebenkreis eine zusätzliche Pumpe eingesetzt werden.

Desweiteren ist aus DD 301 361 A7 eine Kanukanalentwicklung bekannt, bei der ebenfalls die oberste Wasserschicht durch eine einstellbare Schneide vom Hauptstrom abgetrennt und durch ein Luftabscheidebecken dem nach unten gelenkten Hauptstrom wieder zugeführt wird. Der Hauptstrom wird hinter einem Auffangsieb nach dem Abschneiden der oberen Wasserschicht einem Diffusor zugeleitet, dem sich nach dem Umlenken des Wasserstroms in vertikale Richtung eine Düse anschließt, wodurch der Druck soweit abgebaut wird, daß der von der Schneide abgetrennte Teilstrom dem Hauptstrom ohne zusätzliche Pumpen wieder zugeführt werden kann. Der Diffusor vor dem Krümmer im Hauptstrom bedingt jedoch eine große Baulänge hinter der Meßstrecke.

Es sind auch Wasserumlaufkanäle gebaut worden, bei denen die oberste, mit Luft angereichterte Wasserschicht nicht abgetrennt wird. Das führt dazu, daß sich vor Wiedereintritt in den geschlossenen Kanal entweder ein Wasserschwall ausbildet, der seinerseits zusätzlich Luft einmischt, oder daß die vom Krümmer ausgehende Deformation der Geschwindigkeitsverteilung über die Wasserhöhe und damit verbunden eine Wasserspiegel absenkung größere Luftvolumenströme mitreißt. Welche Strömung sich einstellt hängt von der Wassergeschwindigkeit (Froude-Zahl) und den geometrischen Verhältnissen ab und ist nicht sicher vorauszubestimmen.

Um zu vermeiden, daß Personen oder Gegenstände von der Wasserströmung mitgerissen werden können, ist bei den meisten bekannten Umlaufkanälen hinter der Meßstrecke ein Fangsieb angeordnet.
Damit durch die Unterdruckzonen hinter den Siebstäben oder anderen Einbauten keine Luft in den Kreislauf gerissen wird, wird angestrebt, daß die Oberkante des Siebes unter dem Wasserspiegel liegt, was aber zu einem Rückstromgebiet führt, in dem sich Schmutz ansammeln kann.

Ausgehend von diesem Stand der Technik ist es Aufgabe der Erfindung, das Abscheiden der in der Meßstrecke oder im Aufenthaltsbereich eines Umlaufkanals mitgerissenen Luftblasen aus dem Wasserstrom mit möglichst geringem zusätzlichen Bau- und Energieaufwand zu gewährleisten und einen zusätzlichen Lufteintrag an der Fangeinrichtung zu verhindern.

Dabei soll die vom Hauptstrom abgeschnittene oberste Wasserschicht ohne zusätzliche Baulänge entgast und ohne zusätzliche Pumpen dem Hauptstrom wieder zugeführt werden.

Eine erfinderungsgemäße Lösung dieser Aufgabe ist im Patentanspruch 1 angegeben Weiterbildungen der Erfindung sind in den abhängigen Ansprüchen gekennzeichnet.

Die Hauptmerkmale der Erfindung bestehen darin, daß die zur Wasseroberfläche der Meßstrecke parallel verlaufende Schneidenunterseite in eine mit einem Radius R gerundete Schneidenvorderkante übergeht und der Raum über der Schneide von einer zur Schneidenvorderkante hin abfallenden Schwallkammer gebildet wird.

Das Fangsieb verläuft durch den Umströmungsbereich vor der Schneidenvorderkante und reicht über den Wasserspiegel hinaus. Unmittelbar im Anschluß an das Fangsieb beginnt unter dem Wasserspiegel die Kreisbogenkontur der Kanalwand.

Überraschenderweise wurde gefunden, daß sich bei erfindungsgemäßer Ausführung eine stabile Umströmung der Schneidenvorderkante aus der Schwallkammer heraus einstellt, die durch das Einströmen der darüberliegenden Wasserschicht, Schwallausbildung, Wasserberuhigung mit Luftausscheidung und Rückströmung in die Meßstrecke gespeist wird.
Da im Bereich der Schneidenvorderkante eine Strömungsrichtungsumkehr verbunden mit starken Geschwindigkeitsgradienten auftritt, werden die Druckverhältnisse an den Siebdrähten bzw. -stegen so verändert, daß praktisch kein Lufteintrag erfolgt.

Verstärken läßt sich die positive Wirkung, indem ein anderweitig abgezweigter, gereinigter und/oder entgaster Wasserstrom der Schwallkammer zugeführt wird.

Die Höhe h der Schwallkammer kann hinreichend genau aus dem Quadrat der Wassergeschwindigkeit w geteilt durch das Doppelte der Erdbeschleunigung g ( h = w²/2g) berechnet werden; die Länge 1 der Schwallkammer beträgt das 3 bis 7-fache der Höhe. Die Neigung des Bodens der Schwallkammer zur Schneidenvorderkante hin beträgt vorzugsweise 2 - 5°.

Die Anordnung des Krümmers direkt am Ende der Meßstrecke oder des Aufenthaltsbereiches und der Schwallkammer über dem Krümmer sichert die kurze Baulänge des Umlaufkanals.

Entgegen der für ausgeführte Anlagen des Standes der Technik üblichen Vorgehensweise, daß der durch die Schneide abgeschnittene Teilstrom vom Hauptstrom abgezweigt, entgast und an anderer Stelle des Wasserkreislaufs wieder zugegeben wird, erfolgt durch die erfindungsgemäße Schwallkammeranordnung über der Schneide auch die Einleitung des abgeschnittenen Teilstromes an der Entnahmestelle.

Weitere Einzelheiten, Merkmale und Vorteile der Erfindung ergeben sich aus der nachfolgenden Beschreibung eines Ausführungsbeispiels unter Bezugnahme auf die zugehörige Zeichnung; es zeigen:

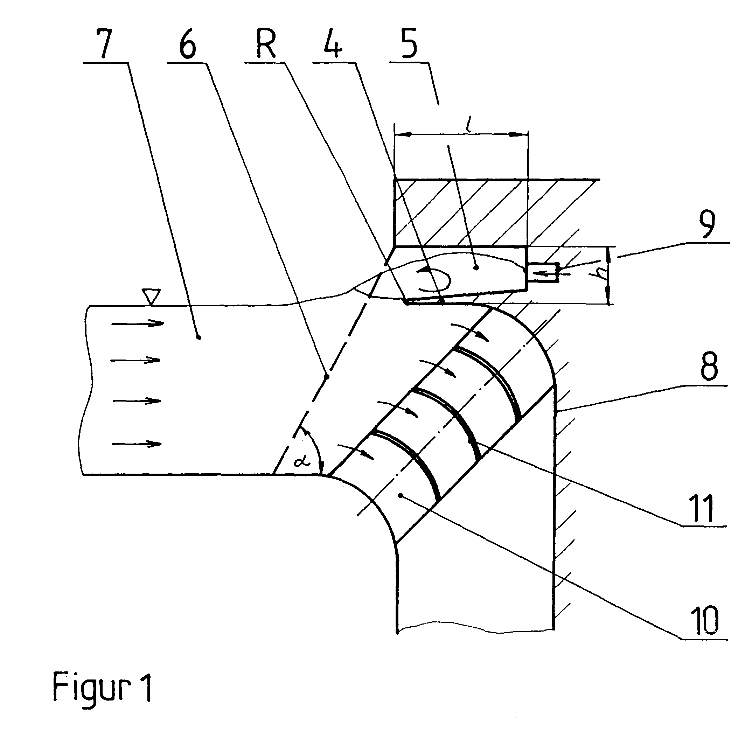

- Fig. 1: einen Schnitt durch den Wasserumlaufkanal am Ende der Meßstrecke mit dem anschließenden Krümmer und der darüber angeordneten Schwallkammer und
- Fig. 2: einen Schnitt durch die Schwallkammer und die sich ausbildenen Stromlinien.

Beschrieben wird die Ausführungsform mit zusätzlicher Wasserzufuhr in die Schwallkammer 5.

Hinter der offenen Meßstrecke 7 des Wasserumlaufkanals wird das Wasser durch den Krümmer 10 aus der horizontalen in die vertikale Richtung umgeleitet. Der Krümmer 10 wird durch die Kanalwand 8 nach außen begrenzt und ist zur Führung des Wasserstromes mit den sich über die gesamte Kanalbreite erstreckenden Krümmerschaufeln 11 versehen.

Am Übergang von der Meßstrecke 7 zur Kanalwand 8 ist die Schneide 4 angeordnet, die an der Schneidenvorderkante 3 den Radius R aufweist. An der Schneidenvorderkante 3 liegt das Fangsieb 6 an, das mit einer Neigung α von etwa 60° im Strömungskanal eingebaut ist. Der Raum über der Schneide 4 mit der Schneidenunterseite 1 und der Schneidenoberseite 2 ist als Schwallkammer 5 ausgebildet. Der Boden der Schwallkammer 5 entspricht der Schneidenoberseite 2, und er ist zur Schneidenvorderkante hin geneigt ausgeführt.

Die Höhe h der Schwallkammer 5 ergibt sich angenähert aus dem Quotienten des ins Quadrat gesetzten Wassergeschwindigkeit w geteilt durch den doppelten Wert der Erdbeschleunigung g. Die Länge 1 der Schwallkammer 5 beträgt dann das 3 bis 7-fache der Höhe h.

Am Ende der Schwallkammer 5 sind die Rohrleitungen 9 angeordnet, durch die zusätzlich anderweitig gereinigtes und entgastes Wasser der Schwallkammer 5 zugeführt wird.

Durch die erfindungsgemäße Anordnung wird eine äußerst geringe Baulänge erreicht und auf den zusätzlichen Einbau von Pumpen verzichtet.

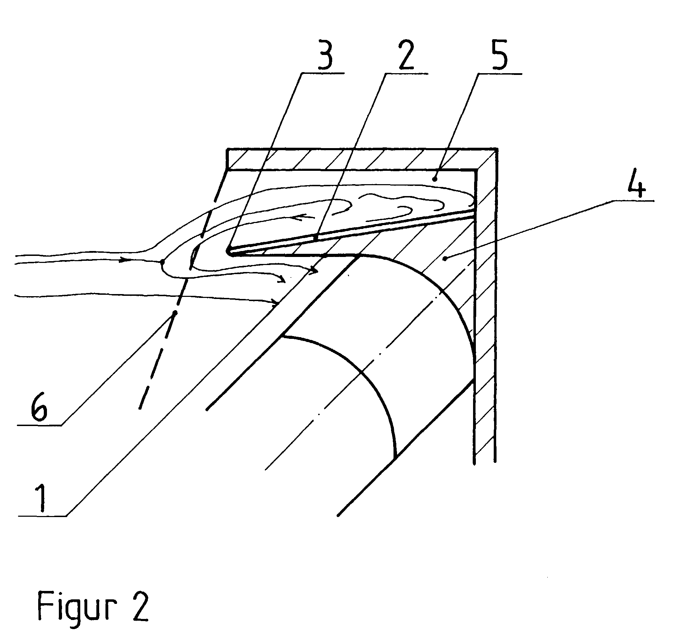

Bei der Schnittdarstellung nach Fig. 2 wurde auf eine zusätzliche Wasserzufuhr mittels Rohrleitungen 9 in die Schwallkammer 5 verzichtet.

Das Fangsieb 6 verläuft in Höhe der Schneide 4 im Rückströmbereich des Schwallwassers und liegt an der Umhausung der Schwallkammer 5 an.

### Liste der Bezugszeichen

- 1 -: Schneidenunterseite
- 2 -: Schneidenoberseite
- 3 -: Schneidenvorderkante
- 4 -: Schneide
- 5 -: Schwallkammer
- 6 -: Fangsieb
- 7 -: Meßstrecke
- 8 -: Kanalwand
- 9 -: Rohrleitung
- 10 -: Krümmer
- 11 -: Krümmerschaufeln

## Patentansprüche

1. Einrichtung zum Ausscheiden von Luftblasen in Wasserumlaufkanälen mit freier Wasseroberfläche an der Meßstrecke (7) oder im Aufenthaltsbereich, bei der die oberste Wasserschicht durch eine Schneide (4) vom Hauptstrom abgetrennt und einer Beruhigungsstrecke zugeführt wird, während der mit einem Fangsieb (6) versehene Hauptstrom durch einen Krümmer (10) nach unten abgelenkt wird,
**gekennzeichnet** durch die folgenden Merkmale
a) die Schneidenunterseite (1) hat einen zur Wasseroberfläche der Meßstrecke (7) etwa parallelen Verlauf,
b) die Schneidenoberseite (2) hat eine geringe Neigung und sie bildet den zur Schneidenvorderkante (3) hin abfallenden Boden für die über der Schneide (4) angeordnete Schwallkammer (5),
c) die Schneidenvorderkante (3) ist mit einem Radius R gerundet und sie wird aus der Schwallkammer (5) heraus stabil umströmt,
d) das Fangsieb (6) verläuft durch den Umströmungsbereich vor der Schneidenvorderkante (3) und reicht über den Wasserspiegel hinaus.

2. Einrichtung nach Anspruch 1,
**dadurch gekennzeichnet,** daß die Neigung der Schneidenoberseite (2) und damit des Bodens der Schwallkammer (5) zur Schneidenvorderkante (3) hin etwa 2 - 5° beträgt.

3. Einrichtung nach Anspruch 1 oder 2,
**dadurch gekennzeichnet,** daß der Radius R der Schneidenvorderkante (3) im Bereich 5 mm < R < 20 mm liegt.

4. Einrichtung nach einem der Ansprüche 1 bis 3,
**dadurch gekennzeichnet,** daß das Fangsieb (6) an der Schneide (4) anliegt und unmittelbar im Anschluß an das Fangsieb (6) unter dem Wasserspiegel die Kreisbogenkontur der Kanalwand (8) beginnt.

5. Einrichtung nach einem der Ansprüche 1 bis 4,
**dadurch gekennzeichnet,** daß die Höhe h der Schwallkammer (5) sich mit hinreichender Genauigkeit aus h = w²/2g errechnet, wobei w für die Wassergeschwindigkeit und g für die Erdbeschleunigung steht, und die Länge 1 der Schwallkammer das 3 bis 7-fache der Höhe h beträgt.

6. Einrichtung nach einem der Ansprüche 1 bis 5,
**dadurch gekennzeichnet,** daß der Schwallkammer (5) durch eine oder mehrere Rohrleitungen (9), die gegenüber dem Querschnitt der Schwallkammer (5) einen relativ kleinen Querschnitt aufweisen, anderweitig abgezweigtes Kreislaufwasser zugeführt wird.

## Claims

1. Device for discharging air bubbles in water circulating channels with a free water surface in the measuring section (7) or area of stay by which the upper water layer is separated from the main flow by means of a knife (4) and led to a stilling zone while the main flow provided with a catch screen (6) is diverted downwards by means of a conduit bend (10)
**characterized** by the following features:
a) the knife bottom side (1) runs approximately parallel to the water surface of the measuring section (7),
b) the knife top side (2) is slightly inclined and forms the bottom sloping in the direction of the knife front edge (3), of the surge chamber (5) arranged over the knife (4),
c) the knife front edge (3) is rounded with the radius R and around it there is a stable flow coming out of the surge chamber,
d) the catch screen (6) passes the flow zone before the knife front edge (3) and reaches beyond the water surface.

2. Device to Claim 1
**characterized in** that the inclination of the knife top side (2) and hence of the bottom of the surge chamber (5) in the direction of the knife front edge (3) is approximately 2-5°.

3. Device to Claim 1 or 2
**characterized in** that the radius R of the knife front edge (3) is in the range of 5 mm < R < 20mm.

4. Device to any of the Claims 1 to 3
**characterized in** that the catch screen (6) is adjacent to the knife (4) and directly after the catch screen (6) the circular arc profile of the channel wall (8) begins below the water surface.

5. Device to any of the Claims 1 to 4
**characterized in** that the height h of the surge chamber (5) calculates with sufficient accuracy from h = w²/2g where w is the water velocity and g is the acceleration due to gravity, and the length 1 of the surge chamber (5) is three- to seven-times the height h.

6. Device to any of the Claims 1 to 5
**characterized in** that circuit water otherwise branched off is fed to the surge chamber (5) through one or several pipes (9), which have a relatively small cross-section compared to the cross-section of the surge chamber (5).

## Revendications

1. Dispositif de décharge de bulles d'air dans des canaux à circulation d'eau muni d'un parcours de mesure (7) où la surface de l'eau est à découvert ou dans un espace de retenue, dans lequel la pellicule d'eau supérieure est séparée du courant principal par une dent et introduite dans un parcours de tranquillisation, pendant que le courant principal pourvu d'un tamis de capture (6) est dévié vers le bas par le biais d'un coude (10) caractérisé par les caractéristiques suivantes
a) la face inférieure de la dent (1) possède un cours à peu près parallèle à celui de la surface de l'eau dans le parcours de mesure (7).
b) la face supérieure de la plaquette (2) possède une faible inclinaison et elle forme le fond s'inclinant vers le bord d'attaque de la plaquette (3) pour la chambre de projection (5) située au dessus de la plaquette (4).
c) le bord d'attaque de la plaquette (3) est arrondi selon un rayon R et celle-ci baigne de manière stable dans l'eau qui ressort de la chambre de projection (5).
d) le tamis de capture (6) traverse la zone où s'écoule l'eau devant le bord d'attaque de la plaquette (3) et se situe au dessus du niveau de l'eau.

2. Dispositif selon la spécification 1 caractérisé par le fait que l'inclinaison de la face supérieure de la plaquette (2) et par conséquent du fond de la chambre de projection (5) vers le bord d'attaque de la plaquette (3) se situe entre **2 à 5°**.

3. Dispositif selon les spécifications 1 ou 2 caractérisé par le fait que le rayon R du bord d'attaque de la plaquette (3) se situe entre **5 et 20 mm** (5 mm < R < 20 mm).

4. Dispositif selon les spécifications 1 à 3 caractérisé par le fait que le tamis de capture (6) est adjacent à la plaquette (4) et que le contour en arc de cercle de la paroie du canal (8) débute immédiatement en faisant suite au tamis de capture (6) sous le niveau d'eau.

5. Dispositif selon l'une des spécifications 1 à 4 caractérisé par le fait que la hauteur h de la chambre de projection (5) se mesure de manière suffisamment précise par **h = w**^{**2**} **/ 2g**, dans la mesure où **w** signifie la vitesse de l'eau et **g** l'accélération de la pesanteur, et que la longeur **L** de la chambre de projection correspond à de 3 à 7 fois la hauteur.

6. Dispositif selon l'une des spécifications 1 à 5 caractérisé par le fait que de l'eau dérivée du circuit alimente autre part la chambre de projection (5) au moyen d'une ou de plusieurs conduites (9), qui par rapport à la section de la chambre de projection (5) présentent une section relativement petite.
